(19) Europäisches Patentamt
European Patent Office
Office européen des brevets

(11) Veröffentlichungsnummer: **0 269 887**
**A2**

(12) # EUROPÄISCHE PATENTANMELDUNG

(21) Anmeldenummer: **87116125.3**

(22) Anmeldetag: **03.11.87**

(51) Int. Cl.[4]: **C08G 63/68** , C10G 33/04

(30) Priorität: **13.11.86 DE 3638744**

(43) Veröffentlichungstag der Anmeldung:
**08.06.88 Patentblatt 88/23**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Böse, Willibald, Dr.**
**Rossfeldstrasse 7**
**D-8269 Burgkirchen(DE)**
Erfinder: **Hofinger, Manfred, Dr.**
**Rossfeldstrasse 7a**
**D-8269 Burgkirchen(DE)**
Erfinder: **Hille, Martin, Dr.**
**In den Eichen 46**
**D-6237 Liederbach(DE)**
Erfinder: **Böhm, Roland**
**Fischbacher Strasse 29**
**D-6233 Kelkheim (Taunus)(DE)**
Erfinder: **Staiss, Friedrich**
**Odenwaldstrasse 21**
**D-62300 Wiesbaden(DE)**

(54) **Verzweigte, quaternäre Polyoxalkylenmischpolyester, Verfahren zu ihrer Herstellung und ihre Verwendung.**

(57) Es werden verzweigte, quaternäre Polyoxalkylenmischpolyester beschrieben, die hergestellt werden, indem ein oxalkyliertes primäres Fettamin und ein mindestens dreiwertiges oxalkyliertes Alkanol oder ein oxalkyliertes Polyamin mit einer Dicarbonsäure oder einem Dicarbonsäureanhydrid unter Polykondensation verestert werden, und das erhaltene Veresterungsprodukt mit Ethylenoxid oder Propylenoxid in Gegenwart von Mineralsäure oder Carbonsäure quaternisiert wird. Die neuen verzweigten, quaternären Polyoxalkylenmischpolyester werden als Demulgatoren und Korrosionsinhibitoren bei der Aufarbeitung von Rohölemulsionen verwendet.

EP 0 269 887 A2

# Verzweigte, quaternäre Polyoxalkylenmischpolyester, Verfahren zu ihrer Herstellung und ihre Verwendung

Die Erfindung betrifft verzweigte, quaternäre Polyoxalkylenmischpolyester, ein Verfahren zu ihrer Herstellung und ihre Verwendung als Korrosionsinhibitoren und Demulgatoren für Rohölemulsionen.

Bei der Rohölförderung stellt die Korrosion der Fördereinrichtungen, Rohrleitungen und Aufbereitungsanlagen ein Problem dar, das über den Zeitraum der Ausbeutung eines Rohölfeldes immer mehr zunimmt. Während aus einem neuerschlossenen Rohölfeld in der Anfangsphase fast ausschließlich reines Rohöl gefördert wird, steigt der Wassergehalt des geförderten Rohöls nach einer bestimmten Zeit an. Die Rohöle enthalten korrosiv wirkende Bestandteile wie Elektrolyte, Schwefelwasserstoff und Kohlendioxid. Während das in der Anfangsphase geförderte reine Rohöl kaum zu Korrosionsproblemen führt, nehmen diese mit steigendem Wassergehalt stark zu. Aus dem Rohöl muß das Wasser, das darin emulsionsartig verteilt ist, vor dem Weitertransport durch Leitungen, Tankwagen oder Schiffe weitgehend abgetrennt werden. Zu diesem Zweck werden dem wasserhaltigen Rohöl sogenannte Demulgatoren oder Emulsionsspalter zugesetzt. Diese Substanzen wirken zwar selbst nicht korrodierend, jedoch fördern sie die Wasserbenetzung in der Anlage und leisten somit der Korrosion indirekt Vorschub.

Man hat schon versucht, diesen Nachteil durch Zugabe geeigneter Korrosionsinhibitoren zu beseitigen. Neben dem Kostenfaktor, der durch Einsatz solcher Inhibitoren bedingt ist, haben die meisten dieser Produkte den Nachteil, daß sie selbst emulgierend oder emulsionsstabilisierend wirken, was nur durch eine Erhöhung der für die optimale Abtrennung des Wassers erforderlichen Spaltermenge ausgeglichen werden kann. Man hat schon kationische Verbindungen eingesetzt, die neben ihrer Wirkung als Korrosionsinhibitoren gleichzeitig auch gute demulgierende Eigenschaften besitzen. Solche Verbindungen sind beispielsweise bekannt aus der deutschen Auslegeschrift 22 38 995 und aus der deutschen Offenlegungsschrift 31 36 298. Sie zeigen teilweise gute Demulgierwirkungen, lassen aber insgesamt noch zu wünschen übrig. Es besteht demnach weiterhin ein Bedürfnis nach Demulgatoren, die selbst korrosionsinhibierend wirken.

Für den genannten Zweck stellt die vorliegende Erfindung verbesserte Mittel zur Verfügung. Es sind dies spezielle verzweigte und quaternäre Polyoxalkylenmischpolyester. Die erfindungsgemäßen Polyoxalkylenmischpolyester sind dadurch gekennzeichnet, daß sie hergestellt worden sind, indem ein oxalkyliertes primäres Fettamin der Formel

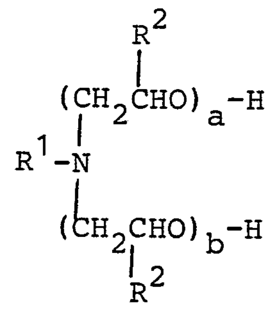

worin

$R^1$ ein Alkylrest oder Alkylenrest mit 8 bis 23 C-Atomen ist,

$R^2$ H oder $CH_3$ ist und innerhalb der Kette des Polyoxalkylenrestes, in Blöcken angeordnet, auch beide Bedeutungen annehmen kann,

und

a und b, gleich oder verschieden, ganze oder gebrochene Zahlen von insgesamt 2 bis 30 sind, mit der Maßgabe, daß weder a noch b Null ist,

und ein mindestens dreiwertiges Alkanol oder ein Polyamin, die jeweils pro acides H-Atom 5 bis 30, vorzugsweise 15 bis 25 Ethylenoxid-Einheiten, 5 bis 30, vorzugsweise 15 bis 25 Propylenoxid-Einheiten oder 3 bis 20, vorzugsweise 5 bis 15 Ethylenoxid-Einheiten und 5 bis 30, vorzugsweise 15 bis 25 Propylenoxid-Einheiten enthalten, mit einer Dicarbonsäure oder einem Dicarbonsäureanhydrid unter Polykondensation verestert worden sind, wobei das oxalkylierte Fettamin, das oxalkylierte, mehrwertige Alkanol oder das oxalkylierte Polyamin und die Dicarbonsäure oder das Dicarbonsäureanhydrid im Molverhältnis von 1 : 0,01 : 0,5 bis 1 : 1 : 3, vorzugsweise 1 : 0,1 : 0,9 bis 1 : 0,5 : 1,5 eingesetzt worden sind, und das erhaltene Reaktionsprodukt (das ist ein Stickstoff enthaltender, verzweigter Polyoxalkylenmischpolyester) mit 1 bis 6 mol, vorzugsweise 4 bis 5 mol Ethylenoxid oder Propylenoxid pro mol stickstoffhaltige Monomereinheiten im Reaktionsprodukt in Gegenwart einer äquimolaren Menge, bezogen auf die stickstoffhaltigen Monomereinheiten im Reaktionsprodukt, von einer Mineralsäure oder Carbonsäure umgesetzt worden ist (quaternisiert worden ist, wobei die Mineralsäure oder Carbonsäure das Anion liefert).

Bevorzugte oxalkylierte, primäre Fettamine der oben angegebenen Formel sind solche, wenn $R^1$ ein Alkylrest mit 12 bis 18 C-Atomen ist, $R^2$ H ist

und a und b, gleich oder verschieden, ganze oder gebrochene Zahlen von insgesamt 2 bis 15 sind, unter Berücksichtigung der oben angegebenen Maßgabe.

Die Oxalkylierung von primären Fettaminen ist wohlbekannt und kann nach einer der Methoden zur Oxalkylierung von acide (aktive) H-Atome tragenden Verbindungen durchgeführt werden. Die oxalkylierten Fettamine können gemäß den Bedeutungen von $R^2$ Einheiten des Ethylenoxids oder Propylenoxids oder blockweise angeordnete Einheiten des Ethylenoxids und Propylenoxids tragen, wobei die ethoxylierten, das heißt nur Ethylenoxid-Einheiten tragenden primären Fettamine bevorzugt sind. Bei den zur Oxalkylierung eingesetzten Fettaminen kann es sich gemäß den Bedeutungen von $R^1$ um einzelne primäre Fettamine oder um Gemische davon handeln. Es kann sich auch um solche Fettamine handeln, deren Kohlenwasserstoff-Kette eine oder mehrere Doppelbindungen enthält, wie die Reste der Öl-, Elaidin-, Linol-oder Linolensäure. Die bevorzugten primären Fettamine sind die technisch verfügbaren Produkte, wie Stearylamin, Cocosfettamin oder Talgfettamin (in diesen technischen Produkten liegen Alkylreste mit im wesentlichen 12 bis 18 C-Atomen vor).

Das oxalkylierte, mindestens dreiwertige Alkanol ist vorzugsweise eines aus der Gruppe bestehend aus Glycerin, Erythrit, Pentaerythrit, Trimethylolethan, Trimethylolpropan, 1,3,5-Hexantriol, Pentit und Hexit, wobei Glycerin, Pentaerythrit und Trimethylolpropan besonders bevorzugt sind. Die oxalkylierten Polyole besitzen pro acides H-Atom, das heißt pro OH-Gruppe, 5 bis 30, vorzugsweise 15 bis 25 Ethylenoxid-Einheiten oder 5 bis 30, vorzugsweise 15 bis 25 Propylenoxid-Einheiten oder 3 bis 20, vorzugsweise 5 bis 15 Ethylenoxid-Einheiten und 5 bis 30, vorzugsweise 15 bis 25 Propylenoxid-Einheiten. Im Falle von Ethylenoxid- und Propylenoxid-Einheiten sind diese statistisch oder blockweise, vorzugsweise blockweise angelagert. Von den in Betracht kommenden oxalkylierten Alkanolen sind jene bevorzugt, die Ethylenoxid und Propylenoxid enthalten, und dies blockweise. Davon sind wiederum jene Ethylenoxid-Propylenoxid-Blöcke (pro acides H-Atom) bevorzugt, die aus einem ersten Propylenoxid-Block mit 5 bis 30, vorzugsweise 15 bis 25 Propylenoxid-Einheiten und einem daran anschließenden Ethylenoxid-Block mit 3 bis 20, vorzugsweise 5 bis 15 Ethylenoxid-Einheiten bestehen.

Das oxalkylierte Polyamin ist vorzugsweise eins aus der Gruppe bestehend aus Ethylendiamin, Diethylentriamin, Triethylentetramin, Tetraethylenpentamin und Pentaethylenhexamin sowie den entsprechenden Propylenpolyaminen, wobei Ethylendiamin, Propylendiamin, Diethylentriamin, Triethylentetramin, Tetraethylenpentamin und die entsprechenden Polypropylenpolyamine besonders bevorzugt sind. Die oxalkylierten Polyamine besitzen ebenso wie die oxalkylierten Polyole pro acides H-Atom 5 bis 30, vorzugsweise 15 bis 25 Ethylenoxid-Einheiten oder 5 bis 30, vorzugsweise 15 bis 25 Propylenoxid-Einheiten oder 3 bis 20, vorzugsweise 5 bis 15 Ethylenoxid-Einheiten und 5 bis 30, vorzugsweise 15 bis 25 Propylenoxid-Einheiten. Im Falle von Ethylenoxid-und Propylenoxid-Einheiten sind diese statistisch oder blockweise, vorzugsweise blockweise angelagert. Von den in Betracht kommenden oxalkylierten Polyaminen sind jene bevorzugt, die Ethylenoxid und Propylenoxid enthalten, und dies blockweise. Davon sind wiederum auch hier jene Ethylenoxid-Propylenoxid-Blöcke (pro acides H-Atom)bevorzugt, die aus einem ersten Propylenoxid-Block mit 5 bis 30, vorzugsweise 15 bis 25 Propylenoxid-Einheiten und einem daran anschließenden Ethylenoxid-Block aus 3 bis 20, vorzugsweise 5 bis 15 Ethylenoxid-Einheiten bestehen.

Die Oxalkylierung der in Rede stehenden Polyole und Polyamine ist ebenso wie die obenerwähnte Oxalkylierung von Fettaminen wohlbekannt und kann nach einer der Methoden zur Oxalkylierung von aktive H-Atome tragenden Verbindungen durchgeführt werden.

Die einzusetzende Dicarbonsäure kann aromatischer oder aliphatischer Art sein. Die aliphatischen Dicarbonsäuren können gesättigt oder ungesättigt sein. Die aromatische Dicarbonsäure ist vorzugsweise die Phthalsäure (Benzol-ortho-dicarbonsäure). Die aliphatische gesättigte Dicarbonsäure ist vorzugsweise eine mit $C_1$ -bis $C_8$ -Alkylen-gruppen, insbesondere mit $C_2$ -bis $C_4$ -Alkylengruppen, wie Malonsäure, Bernsteinsäure, Glutarsäure, Adipinsäure, Pimelinsäure, Suberinsäure, Acelainsäure und Sebacinsäure. Die aliphatische ungesättigte Dicarbonsäure ist vorzugsweise die Fumarsäure oder die Maleinsäure. Von den genannten Dicarbonsäuren sind die aliphatischen gesättigten Dicarbonsäuren sowie die Maleinsäure bevorzugt. Bezüglich der Dicarbonsäureanhydride, die anstelle der Säuren eingesetzt werden können, gilt analog das, was bezüglich der Dicarbonsäuren gesagt worden ist.

Die Herstellung der erfindungsgemäßen quaternären, verzweigten Polyoxalkylenmischpolyester erfolgt dadurch, daß ein oxalkyliertes Fettamin der genannten Art und ein oxalkyliertes Alkanol oder ein oxalkyliertes Polyamin der genannten Art mit einer Dicarbonsäure oder einem Dicarbonsäureanhydrid der genannten Art verestert werden, wobei das Fettamin, das Alkanol oder das Polyamin und die Dicarbonsäure oder das Dicarbonsäureanhydrid im Molverhältnis von 1 : 0,01 : 0,5 bis 1 : 1 : 3, vorzugsweise 1 : 0,1 : 0,9 bis 1 :

0,5 : 1,5 eingesetzt werden, und daß das erhaltene Veresterungsprodukt mit 1 bis 6 mol, vorzugsweise 4 bis 5 mol Ethylenoxid oder Propylenoxid pro N-Atom im Veresterungsprodukt in Gegenwart einer der Zahl der N-Atome im Veresterungsprodukt äquivalenten Menge von einer Mineralsäure oder Carbonsäure quaternisiert wird (die eingesetzte Säure liefert das Anion bei der Quaternisierungsreaktion; die Zahl der N-Atome im Veresterungsprodukt kann beispielsweise durch Bestimmung der Aminzahl des Veresterungsproduktes festgestellt werden).

Die unter Polykondensation verlaufende Veresterung der oxalkylierten Fettamine und oxalkylierten Polyole oder Polyamine mit einer Dicarbonsäure oder einem Dicarbonsäureanhydrid wird unter Verwendung eines höherseidenden, inerten Lösungsmittels wie Toluol oder Xylol, oder ohne Lösungsmittel in der Schmelze und unter Abdeckung mit einem Schutzgas durchgeführt, wobei die Durchführung in der Schmelze bevorzugt ist. Bei Veresterung in einem Lösungsmittel wählt man als Reaktionstemperatur zweckmäßigerweise die Rückflußtemperatur des Reaktionsgemisches und entfernt das gebildete Reaktionswasser durch azeotrope Destillation.Bei Veresterung in Substanz wird das Reaktionswasser direkt aus der Reaktionsmischung ausgetragen (abdestilliert). Die Reaktionstemperaturen liegen hier bei 140 bis 220 °C, vorzugsweise 160 bis 180°C. Zur Beschleunigung der Reaktion verwendet man, wie es bei Veresterungsreaktionen zweckmäßig ist, einen sauren Katalysator. Der Verlauf und das Ende der Reaktion kann mit Hilfe des entstehenden Reaktionswassers oder durch die Bestimmung der Amin-und/oder Säurezahl kontrolliert werden. Die als Reaktionsprodukt erhaltenen verzweigten Polyoxalkylenmischpolyester stellen gelb bis braun gefärbte, mehr oder weniger viskose Flüssigkeiten dar. Sie besitzen eine Viskosität von 2 000 bis 50 000 mPa • s, vorzugsweise 4 000 bis 30 000 mPa • s.

Zur Quaternisierung des Reaktionsproduktes wird dieses mit Ethylenoxid oder Propylenoxid in der oben angegebenen Menge, vorzugsweise mit Ethylenoxid, bei einer Temperatur von 60 bis 100 °C, vorzugsweise 75 bis 85 °C, umgesetzt, wobei zur Salzbildung eine äquimolare Menge (entprechend den N-haltigen Monomereinheiten) Carbonsäure oder Mineralsäure eingesetzt wird. Der Quaternisierungsgrad des durch die Quaternisierung erhaltenen Produktes kann zum Beispiel durch Zweiphasentitration mit Natriumdodecylsulfat bei pH 1 bis 2, beziehungsweise pH 10, ermittelt werden. Die erhaltenen erfindungsgemäßen verzweigten, quaternären Polyoxalkylenmischpolyester stellen gelb bis braun gefärbte, mehr oder weniger viskose Flüssigkeiten dar und werden durch ihren Quaternisierungsgrad charakterisiert.

Nachstehend wird ein bevorzugtes Verfahren zur Herstellung der neuen quaternären, verzweigten Polyoxalkylenmischpolyester näher beschrieben.

Das oxalkylierte Fettamin, das oxalkylierte Alkanol oder das oxalkylierte Polyamin und die Dicarbonsäure oder das Anhydrid sowie saurer Katalysator werden in einem Reaktionsgefäß vorgelegt. Geeignete saure Katalysatoren sind Halogenwasserstoffsäuren, wie Salzsäure oder Bromwasserstoffsäure, Phosphorsäuren, wie unterphosphorige Säure oder Orthophosphorsäure, Schwefelsäure, Sulfonsäuren, wie Methansulfonsäure, para-Toluolsulfonsäure oder Dodecylbenzolsulfonsäure, Halogenessigsäuren, wie Trichloressigsäure oder Trifluoressigsäure, und Mischungen hiervon. Bevorzugt sind die Salzsäure, Phosphorsäuren und Sulfonsäuren. Die Menge an saurem Katalysator beträgt im allgemeinen 0,05 bis 5 Gew.-%, vorzugsweise 0,1 bis 1 Gew.-%, bezogen auf die Gewichtssumme aus den vorgelegten drei Reaktionskomponenten. Die im Reaktionsgefäß vorgelegte Mischung wird unter Rühren und Durchleiten eines inerten Gases, vorzugsweise Stickstoff, zur Erzeugung einer inerten Gasatmosphäre auf 140 bis 220 °C, vorzugsweise 160 bis 180 °C, erhitzt und bei dieser Temperatur (Reaktionstemperatur, Veresterungstemperatur) unter kontinuierlicher Austragung des entstehenden Wassers gehalten, bis die Umsetzung beendet ist. Der Verlauf und das Ende der Umsetzung kann nach einer der oben erwähnten Methoden kontrolliert werden. Das Umsetzungsprodukt, das gegebenenfalls mit Wasser zur Entfernung des eingesetzten Katalysators gewaschen werden kann, ist eine gelb bis braun gefärbte, mehr oder weniger viskose Flüssigkeit. Die Reaktionszeit liegt im Bereich von 5 bis 30 Stunden.

Die Quaternisierung des durch die Veresterung erhaltenen Reaktionsproduktes (das ist ein verzweigter Polyoxalkylenmischpolyester mit stickstoffhaltigen Monomereinheiten) wird in wäßriger Phase durchgeführt, gegebenenfalls unter Zusatz eines Lösungsmittels, beispielsweise eines kurzkettigen einwertigen Alkanols mit einem Siedepunkt, der oberhalb der Quaternisierungstemperatur liegt. Das durch die Veresterung erhaltene Reaktionsprodukt und eine der Molmasse der stickstoffhaltigen Monomereinheiten im Reaktionsprodukt äquimolare Menge an Mineralsäure oder Carbonsäure werden in einem geeigneten Rührautoklaven vorgelegt und bei einer Temperatur von 60 bis 100 °C, vorzugsweise 75 bis 85 °C, mit Ethylenoxid oder Propylenoxid, vorzugsweise mit Ethylenoxid, beaufschlagt, und zwar mit 1 bis 6 mol, vorzugsweise 4 bis 5 mol, Ethylenoxid oder Propylenoxid, vorzugsweise Ethylenoxid, pro mol stickstoffhaltiger Monomereinheiten in dem zur Quaternisierung eingesetzten Reaktionsprodukt. Während der Beaufschlagung wird aus Zweckmäßigkeitsgründen ein Reaktionsdruck von etwa 3 bar nicht überschritten. Als Mineralsäuren werden vorzugsweise Halogenwasserstoffsäuren, wie Salzsäure und Bromwasserstoffsäure, Phosphorsäuren, wie phosphorige Säure und Phosphorsäure, Schwefelsäure oder Sulfonsäuren, wie Toluolsulfonsäure und Methansulfonsäure,eingesetzt, wobei die Phosphorsäure besonders bevorzugt ist. Als Carbonsäuren werden vorzugsweise aliphatische Carbonsäuren mit 1 bis 6 Kohlenstoffatomen, wie Ameisensäure, Essigsäure, Propionsäure und Buttersäure, aliphatische Hydroxycarbonsäuren mit 1 bis 6 Kohlenstoffatomen und mit 1 bis 3 Hydroxylgruppen, wie Glykolsäure und Milchsäure, oder aromatische Carbonsäuren, wie Benzoesäure und Salicylsäure, eingesetzt. Die Carbonsäure kann auch eine, gegebenenfalls OH-substituierte, Di-oder Tricarbonsäure sein, wie Bernsteinsäure, Malon-, Malein-, Fumar-, Äpfel-, Wein-oder Zitronensäure. Besonders bevorzugte Säuren sind Essigsäure, Propionsäure, Glykolsäure, Milchsäure und Phosphorsäure. Der Verlauf und das Ende der Umsetzung kann am Druckverlauf im Reaktionsgefäß verfolgt werden. Es kann auch der Quaternisierungsgrad nach der oben erwähnten Methode, das heißt aus dem Verhältnis der sauren und der alkalischen Zweiphasentitration mit Natriumdodecylsulfat, bestimmt werden. Das Umsetzungsprodukt ist eine gelb bis braun gefärbte, mehr oder weniger viskose Flüssigkeit und stellt die erfindungsgemäßen verzweigten, quaternären Polyoxalkylenmischpolyester dar. Die Reaktionszeit liegt im Bereich von 10 bis 20 h.

Die erfindungsgemäßen verzweigten, quaternären Polyoxalkylenmischpolyester mit den drei Komponenten, nämlich oxalkyliertes,mindestens dreiwertiges Alkanol oder oxalkyliertes Polyamin, oxalkyliertes Fettamin und Dicarbonsäure, und quaternisiert mit einer bestimmten Menge Ethylenoxid oder Propylenoxid, weisen eine spezifische chemische Charakteristik und eine hochverzweigte Struktur auf. Sie besitzen einen Quaternisierungsgrad von 10 bis 98 %, vorzugsweise 30 bis 70 %.

Die erfindungsgemäßen verzweigten, quaternären Polyoxalkylenmischpolyester zeichnen sich durch eine hohe Demulgierwirkung aus. Bei den üblichen Erdöl-Aufbereitungstemperaturen wird schon nach kurzer Separationszeit eine vollständige Wasserabscheidung und Reduzierung des Salzgehaltes erreicht. Mit den neuen Erdölspaltern werden also bei den üblichen Aufbereitungstemperaturen nach kurzer Separationszeit abnahmespezifische Roherdöle erhalten. Die erfindungsgemäßen quaternären Polyoxalkylenmischpolyester bewirken neben der guten und schnellen Demulgierung auch einen hohen Korrosionsschutz. Aufgrund ihrer korrosionsinhibierenden Wirkung sind die eingangs erwähnten Korrosionsprobleme bei Einsatz der erfindungsgemäßen Demulgatoren weitgehend ausgeschaltet. Die Einsatzmenge an erfindungsgemäßem Demulgator kann in weiten Grenzen variieren. Sie hängt insbesondere von der Art des Roherdöls und der Aufbereitungstemperatur ab. Die wirksame Menge beträgt im allgemeinen 5 bis 100 g pro Tonne, vorzugsweise 10 bis 50 g pro Tonne. Die neuen Spalter werden zum Zweck der besseren Dosierung und Verteilbarkeit vorzugsweise in Lösung eingesetzt. Als Lösemittel sind Wasser oder organische Lösemittel, wie Alkohole, beispielsweise Methanol, Isopropanol und Butanol, aromatische Kohlenwasserstoffe, beispielsweise Toluol und Xylol, und handelsübliche Mischungen aus höheren Aromaten geeignet.

Die Erfindung wird nun an Beispielen noch näher erläutert.

Beispiel 1

Bereitung des verzweigten Polyoxalkylenmischpolyesters: 203,0 g (0,30 mol) eines (im Mittel) 10 mol Ethylenoxid enthaltenden Stearylamins, 44,0 g (0,30 mol) Adipinsäure und 307,0 g (0,066 mol) eines Glycerinblockoxalkylates mit (im Mittel) 22,7 mol Propylenoxid als erstem Block und 5,0 mol Ethylenoxid als zweitem Block pro acides H-Atom sowie 4 ml 37 gew.-%ige Salzsäure und 1 ml 50 gew.-%ige unterphosphorige Säure als Veresterungskatalysator (das sind 0,30 Gew.-% Salzsäure und 0,20 Gew.-% unterphosphorige Säure, Gewichtsprozente jeweils bezogen auf das vorgelegte Reaktionsgemisch aus dem ethoxylierten Stearylamin, der Adipinsäure und dem Glycerinblockoxalkylat) wurden in einen 1-l-Dreihalskolben mit Rührer, Wasserabscheider und Innenthermometer vorgelegt. Das Molverhältnis zwischen den umzusetzenden Reaktionskomponenten, dem ethoxylierten Fettamin, dem Glycerinblockoxalkylat und der Adipinsäure, betrug also 1 : 0,22 : 1. Der Kolbeninhalt wurde unter Rühren und Durchleiten von Stickstoff zur Aufrechterhaltung einer Stickstoffatmosphäre auf 180 °C erhitzt und bei dieser Reaktionstemperatur 20 Stunden lang unter Rühren und einem Wasserstrahlvakuum gehalten, wobei sich kontinuierlich Reaktionswasser abschied. Nach der angegebenen Reaktionszeit war die Veresterungsreaktion beendet. Es lag ein braun gefärbtes, zähflüssiges Reaktionsprodukt vor. Der so erhaltene verzweigte Polyoxalkylenmischpolyester ist gekennzeichnet durch eine Viskosität von 4600 mPa s bei 25 °C.

Quaternisierung des Polyesters:

454,0 g des erhaltenen Polyoxalkylenmischpolyesters (das sind 0,25 mol, bezogen auf die stickstoffhaltigen Monomereinheiten im Polyester) und 28,0 g (0,25 mol) 80 gew.-%ige Milchsäure sowie 13,0 g Wasser und 29,0 g Isobutanol als Lösungsmittel wurden in einem 1-l-Dreihalskolben mit Rührer und Innenthermometer vorgelegt. Der Kolbeninahlt wurde unter Rühren auf 80 °C erhitzt und bei dieser Temperatur mit 55,1 g (1,25 mol) Ethylenoxid beaufschlagt unter Einhaltung eines maximalen Druckes von 2,5 bar und einer Reaktionszeit von insgesamt 15 h. Es wurde also mit 5 mol Ethylenoxid pro mol stickstoffhaltiger Monomereinheiten quaternisiert. Das Quaternisierungsprodukt war eine hellbraune Flüssigkeit. Der so erhaltene verzweigte quaternäre Polyoxalkylenmischpolyester ist gekennzeichnet durch einen Quaternisierungsgrad von 68,5 %.

Beispiel 2

Ansatz (für die Bereitung des Polyoxalkylenmischpolyesters): 150,0 g (0,50 mol) Cocosfettamin mit 2 mol Ethylenoxid, 465,0 g (0,10 mol) Glycerinblockoxalkylat gemäß Beispiel 1, 80,4 g (0,55 mol) Adipinsäure und Veresterungskatalysator wie in Beispiel 1. Das Molverhältnis zwischen den umzusetzenden Reaktionskomponenten betrug also 1 : 0,2 :1,1. Durchführung der Veresterung wie in Beispiel 1, mit dem Unterschied, daß eine Temperatur von 160 °C und eine Reaktionszeit von 9 h eingehalten wurde. Die Viskosität des erhaltenen verzweigten Polyoxalkylenmischpolyesters: 5300 mPa s bei 25 °C.
Ansatz für die Quaternisierung: 412,0 g (0,30 mol) Polyoxalkylenmischpolyester, 39,3 g (0,30 mol) 58 gew.-%ige Glykolsäure, 10,0 g Wasser und 28,0 g Isobutanol. Quaternisierung mit 66,0 g (1,50 mol) Ethylenoxid, das sind 5 mol Ethylenoxid pro mol stickstoffhaltiger Monomereinheiten. Durchführung der Quaternisierung wie in Beispiel 1. Quaternisierungsgrad des als hellbraune Flüssigkeit erhaltenen verzweigten quaternären Polyoxalkylenmischpolyesters: 67,5 %.

Beispiel 3

Ansatz: 112,0 g (0,30 mol) Talgfettamin mit 2 mol Ethylenoxid, 598,0 g (0,11 mol) Pentaerythritblockoxalkylat mit 18,5 mol Propylenoxid als erstem Block und 7 mol Ethylenoxid als zweitem Block pro acides H-Atom, 52,6 g (0,36 mol) Adipinsäure und 2 ml Methansulfonsäure als Katalysator. Das Molverhältnis zwischen den umzusetzenden Reaktionskomponenten betrug also 1 : 0,37 : 1,2. Durchführung der Veresterung wie in Beispiel 1, mit dem Unterschied, daß eine Temperatur von 160 °C und eine Reaktionszeit von 12 h eingehalten wurde. Viskosität des erhaltenen verzweigten Polyoxalkylenmischpolyesters: 4400 mPa s bei 25 °C.
Ansatz für die Quaternisierung: 510,0 g (0,20 mol) Polyoxalkylenmischpolyester, 26,2 g (0,20 mol) 58 gew.-%ige Glykolsäure, 7,0 g Wasser und 31,0 g Isobutanol. Quaternisierung mit 44,0 g (1,0 mol) Ethylenoxid, das sind 5 mol Ethylenoxid pro mol stickstoffhaltiger Monomereinheiten. Durchführung der Quaternisierung wie in Beispiel 1, mit dem Unterschied, daß eine Reaktionszeit von 14 h eingehalten wurde. Quaternisierungsgrad des als hellbraune Flüssigkeit erhaltenen verzweigten quaternären Polyoxalkylenmischpolyesters: 62,0 %.

Beispiel 4

Ansatz: 197,0 g (0,30 mol) Talgfettamin mit 10 mol Ethylenoxid, 300,0 g (0,06 mol) Pentaerythritblockoxalkylat mit 16 mol Propylenoxid als erstem Block und 7 mol Ethylenoxid als zweitem Block pro acides H-Atom, 29,4 g (0,30 mol) Maleinsäureanhydrid und 2 ml Methansulfonsäure als Katalysator. Das Molverhältnis zwischen den umzusetzenden Reaktionskomponenten betrug also 1 : 0,2 : 1. Durchführung der Veresterung wie in Beispiel 1, mit dem Unterschied, daß eine Temperatur von 160 °C und eine Reaktionszeit von 7 h eingehalten wurde.

Viskosität des erhaltenen verzweigten Polyoxalkylenmischpolyesters: 10800 mPa s bei 25 °C.
Ansatz für die Quaternisierung: 358,0 g (0,20 mol) Polyoxalkylenmischpolyester, 22,5 g (0,20 mol) 80 gew.-%ige Milchsäure, 10,0 g Wasser und 23,0 g Isobutanol. Quaternisierung mit 35,5 g (0,80 mol) Ethylenoxid, das sind 4 mol Ethylenoxid pro mol stickstoffhaltiger Monomereinheiten. Durchführung der Quaternisierung wie in Beispiel 1, mit dem Unterschied, daß eine Reaktionszeit von 12 h eingehalten wurde. Quaternisierungsgrad des als hellbraune Flüssigkeit erhaltenen verzweigten quaternären Polyoxalkylenmischpolyesters. 65,5 %.

Beispiel 5

Ansatz: 148,0 g (0,40 mol) Talgfettamin mit 2 mol Ethylenoxid, 374,0 g (0,09 mol) Trimethylolpropanblockoxalkylat mit 19 mol Propylenoxid als erstem Block und 5,3 mol Ethylenoxid als zweitem Block pro acides H-Atom, 37,3 g (0,38 mol) Maleinsäureanhydrid und Veresterungskatalysator wie in Beispiel 1. Das Molverhältnis zwischen den umzusetzenden Reaktionskomponenten betrug also 1 : 0,23 : 0,95. Durchführung der Veresterung wie

in Beispiel 2. Viskosität des erhaltenen verzweigten Polyoxalkylenmischpolyesters: 21000 mPa s bei 25 °C.
Ansatz für die Quaternisierung: 360,0 g (0,25 mol) Polyoxalkylenmischpolyester, 16,0 g (0,25 mol) Essigsäure, 18,0 g Wasser und 21,0 g Isobutanol. Quaternisierung mit 50,6 g (1,15 mol) Ethylenoxid, das sind 4,6 mol Ethylenoxid pro mol stickstoffhaltiger Monomereinheiten. Durchführung der Quaternisierung wie in Beispiel 4. Quaternisierungsgrad des als hellbraune Flüssigkeit erhaltenen verzweigten quaternären Polyoxalkylenmischpolyesters: 30,2 %.

Beispiel 6

Ansatz: 119,0 g (0,20 mol) Stearylamin mit 8 mol Ethylenoxid, 520,0 g (0,10 mol) Ethylendiaminblockoxalkylat mit 18,8 mol Propylenoxid als erstem Block und 5 mol Ethylenoxid als zweitem Block pro acides H-Atom, 19,6 g 0,20 mol) Maleinsäureanhydrid und Veresterungskatalysator wie in Beispiel 1. Das Molverhältnis zwischen den umzusetzenden Reaktionskomponenten betrug also 1 : 0,5 : 1. Durchführung der Veresterung wie in Beispiel 2. Viskosität des erhaltenen verzweigten Polyoxalkylenmischpolyesters: 23000 mPa s bei 25 °C.
Ansatz für die Quaternisierung: 415,0 g (0,25 mol) Polyoxalkylenmischpolyester, 28,8 g (0,25 mol) 85 gew.-%ige Phosphorsäure ($H_3PO_4$), 14,0 g Wasser und 27,0 g Isobutanol. Quaternisierung mit 44,1 g (1,0 mol) Ethylenoxid, das sind 4 mol Ethylenoxid pro mol stickstoffhaltiger Monomereinheiten. Durchführung der Quaternisierung wie in Beispiel 4. Quaternisierungsgrad des als hellbraune Flüssigkeit erhaltenen verzweigten quaternären Polyoxalkylenmischpolyesters: 36,8 %.

Beispiel 7

Ansatz: 203,0 g (0,30 mol) Stearylamin mit 10 mol Ethylenoxid, 317,0 g (0,06 mol) Ethylendiaminblockoxalkylat mit 16,8 mol Propylenoxid als erstem Block und 7,5 mol Ethylenoxid als zweitem Block pro acides H-Atom, 33,2 g (0,30 mol) Phthalsäure und 4 ml 37 gew.-%ige Salzsäure als Katalysator. Das Molverhältnis zwischen den umzusetzenden Reaktionskomponenten betrug also 1 : 0,2 : 1. Durchführung der Veresterung wie in Beispiel 1, mit dem Unterschied, daß eine Temperatur von 160 °C und eine Reaktionszeit von 18 h eingehalten wurde. Viskosität des erhaltenen verzweigten Polyoxalkylenmischpolyesters: 8600 mPa s bei 25 °C.
Ansatz für die Quaternisierung: 336,0 g (0,25 mol) Polyoxalkylenmischpolyester, 18,5 g (0,25 mol) Propionsäure, 18,0 g Wasser und 24,0 g Isobutanol. Quaternisierung mit 55,1 g (1,25 mol) Ethylenoxid, das sind 5 mol Ethylenoxid pro mol stickstoffhaltiger Monomereinheiten. Durchführung der Quaternisierung wie in Beispiel 1, mit dem Unterschied, daß eine Reaktionszeit von 10 h eingehalten wurde. Quaternisierungsgrad des als hellbraune Flüssigkeit erhaltenen verzweigten quaternären Polyoxalkylenmischpolyesters: 52,0 %.

Wenn auch die Oxalkylierung von acide H-Atome tragenden Verbindungen, wie Fettaminen, Alkanolen und Polyaminen, schon seit langem wohlbekannt ist, sei hier dennoch die Bereitung der gemäß Erfindung einzusetzenden oxalkylierten Fettamine, Alkanole und oxalkylierten Polyamine kurz beschrieben: Die Oxalkylierung der in Rede stehenden Verbindungen wird im allgemeinen in der Weise durchgeführt, daß die Verbindung in Gegenwart von einem basischen Katalysator, vorzugsweise Kaliumhydroxid oder Natriumhydroxid, in einer Menge von etwa 0,1 bis 5 Gew.-%, bezogen auf die Gewichtsmenge der zu oxalkylierenden Verbindung, bei einer Temperatur von 100 bis 150 °C mit dem Oxalkylierungsmittel, das heißt Ethylenoxid und/oder Propylenoxid, beaufschlagt wird, wobei sich der aus den Reaktionskomponenten bei der Reaktionstemperatur ergebende Druck einstellt. Das Ende der Reaktion ist beispielsweise am abgenommenen und konstant bleibenden Druck erkennbar. Die oxalkylierte Verbindung kann, sofern es gewünscht wird, vom Katalysator beispielsweise durch Waschen mit Wasser befreit werden.

Die erfindungsgemäßen verzweigten, quaternären Polyoxalkylenmischpolyester der Beispiele 1 bis 7 wurden auf ihre Demulgierwirkung anhand verschiedener Rohölemulsionen getestet. Die Testergebnisse sind in den folgenden Tabellen I und II zusammengefaßt. Sie zeigen, daß die erfindungsgemäßen Produkte hervorragende Erdölspalter sind.

Die erfindungsgemäßen Produkte der Beispiele 1 bis 7 wurden ferner auf ihre Inhibierwirkung der Korrosion getestet. Bei diesem Test wurde der Gewichtsverlust von Coupons aus Kohlenstoffstahl mit 20 cm² Oberfläche bestimmt. Die Coupons tauchten 6 Stunden lang in Wasser mit 20 Gew.-% Natriumchlorid und 60 °C ein. Durch die ständig gerührte Lösung perlte während der Versuchsdauer ein Kohlendioxid-Strom. Die Inhibierung wird in Prozenten angegeben, wobei der Blindwert ohne Inhibitor als Bezugsgröße 0 % ist (dies entspricht 100 % Gewichtsverlust). Die Testergebnisse sind in der folgenden Tabelle III zusammengefaßt. Sie zeigen die hervorragende Korrosionsinhibierung der erfindungsgemäßen Produkte.

## TABELLE I

| | |
|---|---|
| Ursprung der Rohölemulsion: | Kolumbien |
| Wassergehalt der Rohölemulsion: | 12,5 Vol.-% |
| Demulgiertemperatur: | 48 °C |
| Dosiermenge: | 18 ppm |

| Produkt von Beispiel | Wasserseparation in Vol-% nach Minuten | | | | | | Restwassergehalt in Vol.-% in der Ölphase |
|---|---|---|---|---|---|---|---|
| | 10 | 20 | 30 | 60 | 120 | 180 | |
| 1 | 20 | 61 | 83 | 100 | 100 | 100 | 0,06 |
| 2 | 10 | 15 | 20 | 99 | 100 | 100 | 0,15 |
| 3 | 39 | 60 | 82 | 98 | 100 | 100 | 0,07 |
| 4 | 40 | 47 | 58 | 85 | 98 | 99 | 0,22 |
| 7 | 56 | 68 | 79 | 89 | 95 | 96 | 0,36 |
| Blindwert | 0 | 0 | 0 | 0 | 0 | 0 | 3,84 |

TABELLE II

| | |
|---|---|
| Ursprung der Rohölemulsion: | Dubai |
| Wassergehalt der Rohölemulsion: | 28,7 Vol.-% |
| Demulgiertemperatur: | 38,5 °C |
| Dosiermenge: | 22 ppm |

| Produkt von Beispiel | Wasserseparation in Vol.-% nach Minuten | | | | | | Restwassergehalt in Vol.-% in der Ölphase |
|---|---|---|---|---|---|---|---|
| | 5 | 10 | 20 | 40 | 60 | 80 | |
| 1 | 61 | 78 | 91 | 98 | 100 | 100 | 0,01 |
| 3 | 82 | 83 | 90 | 96 | 97 | 100 | 0,02 |
| 4 | 79 | 82 | 87 | 92 | 95 | 98 | 0,06 |
| 5 | 40 | 62 | 83 | 93 | 99 | 100 | 0,03 |
| 6 | 48 | 61 | 75 | 88 | 100 | 100 | 0,02 |
| Blindwert | 0 | 0 | 0 | 0 | 0 | 0 | 2,49 |

## TABELLE III

| Produkt aus Beispiel | Einsatzmenge 10 ppm | Einsatzmenge 40 ppm | Einsatzmenge 60 ppm |
|---|---|---|---|
| | % Inhibierung | | |
| 1 | 81,8 | 89,9 | 91,6 |
| 2 | 89,5 | 90,0 | 95,8 |
| 3 | 84,5 | 93,2 | 96,6 |
| 5 | 86,4 | 86,8 | 87,6 |
| 7 | 81,9 | 86,0 | 88,9 |

## Ansprüche

1. Verzweigte, quaternäre Polyoxalkylenmischpolyester, dadurch gekennzeichnet, daß sie hergestellt worden sind, indem ein oxalkyliertes primäres Fettamin der Formel

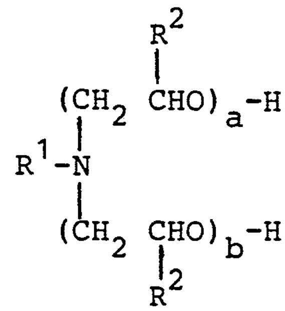

worin $R^1$ ein Alkylrest oder Alkylenrest mit 8 bis 23 C-Atomen ist, $R^2$ H oder $CH_3$ ist und innerhalb der Kette des Polyoxalkylenrestes, in Blöcken angeordnet, auch beide Bedeutungen annehmen kann, und a und b, gleich oder verschieden, ganze oder gebrochene Zahlen von insgesamt 2 bis 30 sind, mit der Maßgabe, daß weder a noch b Null ist,

und ein mindestens dreiwertiges Alkanol oder ein Polyamin, die jeweils pro acides H-Atom 5 bis 30 Ethylenoxid-Einheiten, 5 bis 30 Propylenoxid-Einheiten oder 3 bis 20 Ethylenoxid-Einheiten und 5 bis 30 Propylenoxid-Einheiten enthalten, mit einer Dicarbonsäure oder einem Dicarbonsäureanhydrid unter Polykondensation verestert worden sind, wobei das oxalkylierte Fettamin, das oxalkylierte, mehrwertige Alkanol oder das oxalkylierte Polyamin und die Dicarbonsäure oder das Dicarbonsäureanhydrid im Molverhältnis von 1 : 0,01 : 0,5 bis 1 : 1 : 3 eingesetzt worden sind, und das erhaltene Reaktionsprodukt mit 1 bis 6 mol Ethylenoxid oder Propylenoxid pro mol stickstoffhaltiger Monomereinheiten im Reaktionsprodukt in Gegenwart einer äquimolaren Menge, bezogen auf die stickstoffhaltigen Monomereinheiten im Reaktionsprodukt, von einer Mineralsäure oder Carbonsäure umgesetzt worden ist.

2. Polyoxalkylenmischpolyester nach Anspruch 1, dadurch gekennzeichnet, daß das dreiwertige Alkanol und das Polyamin pro acides H-Atom 15 bis 25 Ethylenoxid-Einheiten, 15 bis 25 Propylenoxid-Einheiten oder 5 bis 15 Ethylenoxid-Einheiten und 15 bis 25 Propylenoxid-Einheiten enthält, wobei das Alkanol Glycerin, Erythrit, Pentaerythrit, Trimethylolethan, Trimethylolpropan, 1,3,5-Hexantriol, ein Pentit oder ein Hexit ist und das Polyamin Ethylendiamin, Diethylentriamin, Triethylentetramin, Tetraethylenpentamin, Pentaethylenhexamin oder ein entsprechendes Propylenpolyamin ist, und daß die Dicarbonsäure Malonsäure, Bernsteinsäure, Glutarsäure, Adipinsäure, Pimelinsäure, Suberinsäure, Acelainsäure, Sebacinsäure Fumarsäure, Maleinsäure oder die Phthalsäure ist und das Dicarbonsäureanhydrid ein Anhydrid der genannten Dicarbonsäuren ist, und daß ferner das erhaltene Reaktionsprodukt mit 4 bis 5 mol Ethylenoxid oder Propylenoxid pro mol stickstoffhaltiger Monomereinheiten im Reaktionsprodukt in Gegenwart von einer Halogenwasserstoffsäure, Phosphorsäure, Schwefelsäure oder einer Sulfonsäure als Mineralsäure oder in Gegenwart von einer aliphatischen Carbonsäure mit 1 bis 6 Kohlenstoffatomen oder einer aliphatischen Hydroxycarbonsäure mit 1 bis 6 Kohlenstoffatomen als Carbonsäure umgesetzt worden ist.

3. Polyoxalkylenmischpolyester nach Anspruch 1, dadurch gekennzeichnet, daß das dreiwertige Alkanol und das Polyamin pro acides H-Atom 15 bis 25 Ethylenoxid-Einheiten, 15 bis 25 Propylenoxid-Einheiten oder 5 bis 15 Ethylenoxid-Einheiten und 15 bis 25 Propylenoxid-Einheiten enthält, wobei das Alkanol Glycerin,Pentaerythrit oder Trimethylolpropan ist und das Polyamin Ethylendiamin, Diethylentriamin, Triethylentetramin, Tetraethylenpentamin oder ein entsprechendes Propylenpolyamin ist, und daß die Dicarbonsäure Bernsteinsäure, Glutarsäure, Adipinsäure, Maleinsäure oder die Phthalsäure ist und das Dicarbonsäureanhydrid ein Anhydrid der genannten Dicarbonsäuren ist, und daß ferner das erhaltene Reaktionsprodukt mit 4 bis 5 mol Ethylenoxid oder Propylenoxid pro mol stickstoffhaltiger Monomereinheiten im Reaktionsprodukt in Gegenwart von Essigsäure, Propionsäure, Glykolsäure, Milchsäure oder Phosphorsäure umgesetzt worden ist.

4. Polyoxalkylenmischpolyester nach Anspruch 1, dadurch gekennzeichnet, daß als oxalkyliertes Fettamin ein solches eingesetzt wird, das sich ergibt, wenn $R^1$ ein Alkylrest mit 12 bis 18 C-Atomen ist, $R^2$ H ist und a und b, gleich oder verschieden, ganze oder gebrochene Zahlen von insgesamt 2 bis 15 sind, als oxalkyliertes dreiwertiges Alkanol Glycerin, Pentaerythrit oder Trimethylolpropan mit einem ersten Block aus 15 bis 25 Propylenoxid-Einheiten und einem daran anschließenden Block aus 5 bis 15 Ethylenoxid-Einheiten, als oxalkyliertes Polyamin Ethylendiamin, Diethylentriamin, Triethylentetramin, Tetraethylenpentamin oder ein entsprechendes Propylenpolyamin mit einem ersten Block aus 15 bis 25 Propylenoxid-Einheiten und einem daran anschließenden Block aus 5 bis 15 Ethylenoxid-Einheiten und als Dicarbonsäure oder Dicarbonsäureanhydrid Bernsteinsäure, Glutarsäure, Adipinsäure, Maleinsäure oder die Phthalsäure beziehungsweise ein Anhydrid dieser Dicarbonsäuren eingesetzt wird, und daß das erhaltene Reaktionsprodukt mit 4 bis 5 mol Ethylenoxid pro mol stickstoffhaltiger Monomereinheiten im Reaktionsprodukt in Gegenwart von Essigsäure, Propionsäure, Glykolsäure, Milchsäure oder Phosphorsäure umgesetzt worden ist.

5. Polyoxalkylenmischpolyester nach einem oder mehreren der Ansprüche 1 bis 4, dadurch gekennzeichnet, daß das Fettamin, das Alkanol oder das Polyamin und die Dicarbonsäure oder Dicarbonsäureanhydrid im Molverhältnis von 1 : 0,1 : 0,9 bis 1 : 0,5 : 1,5 eingesetzt werden.

6. Polyoxalkylenmischpolyester nach einem oder mehreren der Ansprüche 1 bis 5, dadurch gekennzeichnet, daß die Veresterungsreaktion in der Schmelze bei einer Temperatur von 160 bis 180 °C und in Gegenwart eines sauren Veresterungskatalysators unter Austragung des Reaktionswassers und die Umsetzung des aus der Veresterungsreaktion erhaltenen Reaktionsproduktes in wäßriger Phase bei einer Temperatur von 75 bis 85 °C durchgeführt worden ist.

7. Verwendung der Polyoxalkylenmischpolyester gemäß Anspruch 1 als Demulgatoren zum Spalten von Rohölemulsionen und als Korrosionsinhibitoren in Anlagen für die Förderung und Aufbereitung von Rohöl und Erdgas.